# EUROPÄISCHE PATENTSCHRIFT

(11) **EP 3 426 431 B1**
(45) Veröffentlichungstag und Bekanntmachung des Hinweises auf die Patenterteilung: **24.06.2020**
(21) Anmeldenummer: 17713572.0
(22) Anmeldetag: 28.02.2017
(51) Int. Cl.: B23K 35/30, B23K 35/02, C22C 38/00, C22C 38/02, C22C 38/04, C22C 38/22, C22C 38/24, C22C 38/26, C22C 38/28, C22C 38/32, C22C 38/38, C22C 38/06

(54) **SCHWEISSZUSATZWERKSTOFF AUS HOCHFESTEM LUFTHÄRTENDEN STAHL**
WELDING MATERIAL MADE OF HIGH-TENSILE, AIR-HARDENABLE STEEL
MÉTAL D'APPORT EN ACIER AUTOTREMPANT À HAUTE RÉSISTANCE

(30) Priorität: 09.03.2016 DE 102016104295
(43) Veröffentlichungstag der Anmeldung: 16.01.2019
(73) Patentinhaber: Salzgitter Flachstahl GmbH, 38239 Salzgitter (DE)
(72) Erfinder: SCHÖTTLER, Joachim, 38118 Braunschweig (DE); FRITZSCHE, Christian, 38259 Salzgitter (DE)
(74) Vertreter: Meissner, Peter E.
(86) Internationale Anmeldenummer: PCT/DE2017/100159
(87) Internationale Veröffentlichungsnummer: WO 2017/152907

(56) Entgegenhaltungen:
- EP-A1- 2 449 138
- EP-A1- 2 578 718
- DE-A1-102007 058 222
- DE-A1-102011 121 705
- US-A1- 2004 140 303
- US-A1- 2004 238 075

## Beschreibung

Die Erfindung betrifft einen Schweißzusatzwerkstoff aus hochfestem, lufthärtenden Stahl gemäß dem Oberbegriff des Patentanspruches 1.

Insbesondere betrifft die Erfindung einen Schweißzusatzwerkstoff, der zum Beispiel im Fahrzeugleichtbau, Maschinenbau oder für die kostengünstige Herstellung von Bauteilen mittels dreidimensionalen Druckes eingesetzt werden kann.

Der heiß umkämpfte Automobilmarkt zwingt die Hersteller u. a. ständig nach Lösungen zur Senkung des Flottenverbrauches unter Beibehaltung eines höchstmöglichen Komforts und größtmöglichem Insassenschutz zu suchen. Dabei spielt einerseits die Gewichtsersparnis aller Fahrzeugkomponenten eine entscheidende Rolle, andererseits aber auch ein möglichst günstiges Verhalten der einzelnen Bauteile bei hoher statischer und dynamischer Beanspruchung im Betrieb, wie auch im Crashfall. Dieser Notwendigkeit versuchen die Lieferanten dadurch Rechnung zu tragen, dass durch die Bereitstellung hochfester und höchstfester Stähle die Wanddicken reduziert werden können bei gleichzeitig verbessertem Bauteilverhalten bei dessen Fertigung und im Betrieb. Derartige Stähle müssen daher vergleichsweise hohen Anforderungen hinsichtlich Festigkeit, Dehnfähigkeit, Zähigkeit, Energieaufnahme und Verarbeitbarkeit, beispielsweise durch Kaltumformen, Schweißen und/oder Oberflächenbehandeln genügen.

Aber auch in der Produktionstechnik und insbesondere im industriellen Modellbau oder bei der Herstellung von Ersatzteilen als Einzelfertigung oder in kleinen Stückzahlen wird die Entwicklung kostengünstiger, ressourcenschonender und schneller Fertigungsmethoden ständig vorangetrieben.

Zum Beispiel werden bei umformtechnisch hergestellten Bauteilen die erforderlichen Bauteileigenschaften durch die Geometrie bestimmt. Werden beispielsweise lokale Verstärkungen an Bauteilen auf Grund erhöhter mechanischer Beanspruchungen benötigt, müssen für angepasste Kleinserien normalerweise aufwändige Änderungen bzw. Neubauten der Umformwerkzeuge vorgenommen werden, was zu hohen Kosten führt. Für die Herstellung von Prototypbauteilen oder Bauteilen mit sehr kleinen Stückzahlen wird daher zunehmend nach alternativen Fertigungsmethoden gesucht.

Ein Beispiel dafür ist das Drucken dreidimensionaler Bauteile, die mittlerweile mittels Laserdrucken auch aus Stahl hergestellt werden können. Die Offenlegungsschrift DE 10 2014 110 662 A1 beschreibt ein Verfahren mit dem mittels eines Laserschmelz- bzw. Lasersinterprozesses dreidimensional geformte Bauteile aus Stahl hergestellt werden können. Hierbei werden durch schichtweises Auftragsschweißen dreidimensional geformte Bauteile erzeugt. Diese Verfahren werden auch unter dem Begriff "additive Fertigung" zusammengefasst.

In der Vergangenheit sind für die beschriebenen Anwendungsbereiche der Bauteilherstellung meist konventionelle Stähle mit relativ großer Blechdicke, wasservergütete hochfeste Feinkornstähle, Mehrphasenstähle oder alternative Werkstoffe, wie Aluminium, eingesetzt worden.

Der Einsatz konventioneller Stähle ist hierbei mit dem Nachteil des großen Bauteilgewichts durch größere Blechdicken behaftet. Alternative höchstfeste Mehrphasenstähle können zwar dünner und damit leicht ausgelegt werden, weisen aber Nachteile, wie schlechtere Schweißeignung und Umformbarkeit infolge der hohen Grundhärte auf. Wasservergütete Stähle sind in der Herstellung teuer und damit oftmals unwirtschaftlich.

Aus diesen Gründen wurden als Alternative lufthärtende Stahlwerkstoffe als Warm- oder Kaltband entwickelt, die die Nachteile bekannter Stähle dadurch überwinden, dass nunmehr allein durch die Abkühlung des Stahls an Luft, beispielsweise nach einer Wärmebehandlung des Bauteils, die geforderten Werkstoffeigenschaften realisiert werden. Derartige Werkstoffe sind zum Beispiel aus den Offenlegungsschriften DE 10 2004 053 620 A1 und DE 10 2007 058 222 A1 der Anmelderin bekannt.

Neben den oben beschriebenen allgemeinen Anforderungen sind im vergüteten Zustand beispielhaft folgende mechanischen Kennwerte zu erreichen:

| | |
|---|---|
| Rₑₗ bzw. R_{p0,2}: | 700 - 850 [MPa] |
| Rₘ: | 800 -1000 [MPa] |
| A₈₀: | ≥ 11 [%] bzw. |
| A₅: | ≥ 13 [%] |

Kühlt das Stahlband nach dem Warmwalzen zumindest abschnittsweise an Luft so schnell ab, dass der Lufthärtungseffekt einsetzt, so kann die Kaltumformbarkeit des Stahlbandes durch einen nachgeschalteten Weichglühvorgang, z. B. in einer Haubenglühe, bzw. durch ein Homogenisierungsglühen erreicht werden. Die Kaltumformbarkeit kann alternativ nach dem Warmwalzen auch erhalten bleiben, wenn ein entsprechend eng gewickeltes Coil langsam, u. U. in einer speziellen wärmegedämmten Haube, abkühlt.

Nach der Kaltumformung bzw. Formgebung des Stahlbandes oder einer Platine aus diesem Stahlband kann der Luftvergütungszustand dann über eine nachträgliche Wärmebehandlung wieder eingestellt werden.

Müssen Verbindungs- oder Auftragsschweißungen an derartigen Stählen durchgeführt oder Bauteile mittels 3D-Druck hergestellt werden, ist es bislang üblich, den Schweißzusatzwerkstoff den geforderten mechanischen Eigenschaften des Bauteils wie z.B. Festigkeit und Zähigkeit entsprechend auszuwählen.

Ein Schweißzusatzwerkstoff zum Lichtbogen- und Laserstrahlschweißen von Mischverbindungen aus austenitsichem hochmanganhaltigem und ferritischen Stahl ist beispielsweise aus DE 10 2011 121 705 A1 bekannt. Ein Schweißdraht zum Kohlendioxid-Lichtbogenschweißen wird in US 2004/140303 A1 offenbart.

Lufthärtende Schweißzusatzwerkstoffe sind zum Verbindungsschweißen aus der Offenlegungsschrift DE 24 35 577 A1 und zum Auftragsschweißen aus der Patentschrift DE 33 05 633 C2 bekannt.

Diese bekannten Schweißzusatzwerkstoffe sind auf Grund ihres Legierungskonzeptes mit hohen Gehalten an teuren Legierungselementen, wie zum Beispiel Nickel und Molybdän unwirtschaftlich.

Der Erfindung liegt daher die Aufgabe zugrunde, mit einem anderen Legierungskonzept einen Schweißzusatzwerkstoff aus hochfestem, lufthärtenden Stahl zur Herstellung von Verbindungs- und Auftragsschweißungen anzugeben, der kostengünstig ist, bei gleichzeitiger Gewährleistung einer hervorragenden allgemeinen Schweißbarkeit. Zudem soll der Schweißzusatzwerkstoff geeignet sein zum dreidimensionalen Drucken von Bauteilen aus diesem Stahl mittels Laserschmelzschweißen oder Lasersintern.

Nach der Lehre der Erfindung wird diese Aufgabe gelöst durch einen hochfesten, lufthärtenden Stahl mit folgenden Gehalten in Masse %:

| | |
|---|---|
| C | 0,07 bis ≤ 0,16 |
| Si | 0,12 bis ≤ 0,80 |
| Mn | 1,00 bis ≤ 2,20 |
| Cr | 0,50 bis ≤ 1,60 |
| Mo | 0,10 bis ≤ 1,00 |
| Al | 0,010 bis ≤ 0,060 |
| N | 0,0020 bis ≤ 0,0150 |
| Ti | 0,010 bis ≤ 0,050 |
| B | 0,0008 bis ≤ 0,0050 |
| P | ≤ 0,020 |
| S | ≤ 0,010 |
| V + 2 x Nb | 0,030 bis ≤ 0,200 |

Rest Eisen einschließlich üblicher stahlbegleitender Elemente, zur Verwendung als Schweißzusatzwerkstoff in Draht- und/oder Pulverform.

Der erfindungsgemäße hochfeste, lufthärtende Schweißzusatzwerkstoff zeichnet sich dadurch aus, dass mit diesem, unter Verzicht auf Nickel und reduziertem Molybdängehalt, kostengünstigen Legierungskonzept und dem im Vergleich zu den bekannten lufthärtenden Schweißzusatzwerkstoffen reduzierten Gehalt an C und Mn eine hervorragende allgemeine Schweißbarkeit mit gleichzeitig hervorragenden Umformeigenschaften erreicht wird.

Der erfindungsgemäße Schweißzusatzwerkstoff ist für alle Schmelzschweißverfahren, insbesondere Metallschutzgasschweißen, darüber hinaus hervorragend geeignet zur Herstellung von Bauteilen mittels dreidimensionalem Druck, zum Beispiel mittels des Laserschmelz- oder Lasersinterprozesses.

Beim 3D-Drucken von Bauteilen oder beim Aufbringen von Verstärkungen an dreidimensional geformten Bauteilen mittels Auftragsschweißen unter Nutzung des erfindungsgemäßen lufthärtenden Schweißzusatzwerkstoffs werden zudem vorteilhaft Schwankungen der Werkstoffeigenschaften in der Wärmeeinflusszone infolge des Lufthärtungseffektes auf Grund der sehr guten Härtbarkeit bei relativ langsamer Abkühlung vermieden.

Bei Untersuchungen hat sich herausgestellt, dass der für den lufthärtenden Effekt maßgebliche Cr-Gehalt auf einen für die Vermeidung von Chromcarbidausscheidungen beim Schweißen unkritischen Wert abgesenkt werden kann, wenn gleichzeitig über ein komplexes Legierungskonzept auf Basis Cr-Mo-Ti-B die Lufthärtbarkeit des Stahls wieder verbessert wird.

Erfindungsgemäß beruht das Legierungskonzept auf der Erkenntnis, dass im Gegensatz zum bekannten Stahl für nahtlose Rohre, bei dem Stickstoff vollständig von Titan abgebunden werden muss um Bornitridausscheidungen zu vermeiden und damit die Wirksamkeit des zugegebenen Bors sicherzustellen, der Stickstoff auch von anderen Legierungselementen wie Cr oder Mo abgebunden wird.

Die Festlegung einer überstöchiometrischen Titanzugabe im Verhältnis zum Stickstoff ist somit nicht mehr zwingend erforderlich. Durch die Zugabe von Vanadin werden bei höheren Anlasstemperaturen Ausscheidungen von Vanadiumcarbonitriden vom Typ V(C,N) ausgelöst, die über eine sekundäre Härtung einem Festigkeitsabfall entgegenwirken.

Vergleichbar dem Vanadium bildet auch Niob Ausscheidungen in Form von Carbiden oder Carbonitriden. Neben einer Kornfeinung können diese Ausscheidungen auch zur Verbesserung der Anlassbeständigkeit beitragen.

Falls beide Elemente der Legierung zugegeben werden, hat sich als günstig für die Summe aus V + 2 x Nb in Masse-% ein Bereich von 0,030 bis ≤ 0,200 herausgestellt.

Auf Basis dieser Erkenntnisse wurde das oben beschriebene erfindungsgemäße Legierungskonzept festgelegt, wobei sich als besonders vorteilhaft für eine Kombination von kostengünstigem Legierungskonzept, guter Schweißeignung und guter Lufthärtbarkeit, folgender Analysenbereich für den Schweißzusatzwerkstoff herausgestellt hat:
C 0,07 bis ≤ 0,12
Al ≤ 0,05
Si 0,20 bis ≤ 0,40
Mn 1,60 bis ≤ 2,10
P ≤ 0,020
S ≤ 0,010
N 0,0030 bis ≤ 0,0125, vorteilhaft 0,0030 bis ≤ 0,0080
Cr 0,70 bis ≤ 0,85
Mo 0,20 bis ≤ 0,35
Ti 0,02 bis ≤ 0,04
V + 2 x Nb 0,05 bis ≤ 0,12
B 0,0020 bis ≤ 0,0040

Rest Eisen einschließlich üblicher stahlbegleitender Elemente.

Wie weitere Untersuchungen an dem erfindungsgemäßen Schweißzusatzwerkstoff gezeigt haben, ist dieser Stahl nicht nur vorteilhaft im Automobilbereich zur Verbindung hochfester Stähle einsetzbar, sondern darüber hinaus für das 3D-Drucken von Bauteilen aus diesem Stahlwerkstoff. Hierbei wird der erfindungsgemäße Stahl als Pulver zum Beispiel für das Lasersintern oder als Draht zum Auftragsschweißen mittels Laser eingesetzt.

Die Vorteile dieses erfindungsgemäßen, lufthärtenden Schweißzusatzwerkstoffs sind nachfolgend noch einmal aufgelistet:
- sehr gute allgemeine Schweißbarkeit für das Verbindungs- und Auftragsschweißen
- Einsatz für geschweißte, statisch und dynamisch hoch belastete Bauteile,
- kostengünstiger als vergleichbare Legierungskonzepte
- hervorragende Eignung zum 3D-Drucken von Bauteilen mittels Lichtbogen- oder Schmelzschweißverfahren

## Patentansprüche

1. Schweißzusatzwerkstoff aus hochfestem, lufthärtenden Stahl als Werkstoff zum Verbindungsschweißen, Auftragsschweißen und zum dreidimensionalen Drucken von Bauteilen mit folgenden Gehalten in Masse-%:
| | |
|---|---|
| C | 0,07 bis ≤ 0,16 |
| Si | 0,12 bis ≤ 0,80 |
| Mn | 1,00 bis ≤ 2,20 |
| Cr | 0,50 bis ≤ 1,60 |
| Mo | 0,10 bis ≤ 1,00 |
| Al | 0,010 bis ≤ 0,060 |
| N | 0,0020 bis ≤ 0,0150 |
| Ti | 0,010 bis ≤ 0,050 |
| V + 2 x Nb | 0,030 bis ≤ 0,200 |
| B | 0,0008 bis ≤ 0,0050 |
| P | ≤ 0,020 |
| S | ≤ 0,010 |
Rest Eisen einschließlich üblicher stahlbegleitender Elemente,in Draht- und/oder Pulverform.

2. Schweißzusatzwerkstoff nach Anspruch 1,
**dadurch gekennzeichnet,**
**dass** der Stahl einen C- Gehalt von 0,07 bis ≤ 0,12 % aufweist.

3. Schweißzusatzwerkstoff nach Anspruch 1 oder 2,
**dadurch gekennzeichnet,**
**dass** der Stahl einen Si- Gehalt von 0,20 bis ≤ 0,40 % aufweist.

4. Schweißzusatzwerkstoff nach einem der Ansprüche 1-3,
**dadurch gekennzeichnet,**
**dass** der Stahl einen Mn-Gehalt von 1,60 bis ≤ 2,10 % aufweist.

5. Schweißzusatzwerkstoff nach einem der Ansprüche 1 -4,
**dadurch gekennzeichnet,**
**dass** der Stahl einen N-Gehalt von 0,0030 bis ≤ 0,0125 % aufweist.

6. Schweißzusatzwerkstoff nach Anspruch 5,
**dadurch gekennzeichnet,**
**dass** der Stahl einen N-Gehalt von 0,0030 bis ≤ 0,0080 % aufweist.

7. Schweißzusatzwerkstoff nach einem der Ansprüche 1 - 6,
**dadurch gekennzeichnet,**
**dass** der Stahl einen Cr-Gehalt von 0,70 bis ≤ 0,85 % aufweist.

8. Schweißzusatzwerkstoff nach einem der Ansprüche 1 - 7,
**dadurch gekennzeichnet,**
**dass** der Stahl einen Mo-Gehalt von 0,20 bis ≤ 0,35 % aufweist.

9. Schweißzusatzwerkstoff nach einem der Ansprüche 1 - 8,
**dadurch gekennzeichnet,**
**dass** der Stahl einen Ti- Gehalt von 0,02 bis ≤ 0,04 % aufweist.

10. Schweißzusatzwerkstoff nach einem der Ansprüche 1 - 9,
**dadurch gekennzeichnet,**
**dass** der Stahl einen Gesamtgehalt von Vanadium und Niob in Form von V + 2 x Nb von 0,05 bis ≤ 0,12 % aufweist.

11. Schweißzusatzwerkstoff nach einem der Ansprüche 1 - 10,
**dadurch gekennzeichnet,**
**dass** der Stahl einen B-Gehalt von 0,0020 bis ≤ 0,0040 % aufweist.

12. Schweißzusatzwerkstoff nach den vorstehenden Ansprüchen zur Verwendung als Werkstoff zum Lichtbogenschweißen, insbesondere Metallschutzgasschweißen sowie zum Laserschmelzschweißen und Lasersintern.

## Claims

1. Welding additive material made of high-strength, air-hardening steel as material for joint welding, build-up welding and for three-dimensional printing of components having the following contents by mass percent:
| | |
|---|---|
| C | 0.07 to ≤ 0.16 |
| Si | 0.12 to ≤ 0.80 |
| Mn | 1.00 to ≤ 2.20 |
| Cr | 0.50 to ≤ 1.60 |
| Mo | 0.10 to ≤ 1.00 |
| Al | 0.010 to ≤ 0.060 |
| N | 0.0020 to ≤ 0.0150 |
| Ti | 0.010 to ≤ 0.050 |
| V + 2 x Nb | 0.030 to ≤ 0.200 |
| B | 0.0008 to ≤ 0.0050 |
| P | ≤ 0.020 |
| S | ≤ 0.010 |
remainder iron including normal steel-accompanying elements, in wire and/or powder form.

2. Welding additive material according to claim 1,
**characterised in that**
the steel has a C-content of 0.07 to ≤ 0.12%.

3. Welding additive material according to claim 1 or 2,
**characterised in that**
the steel has an Si-content of 0.20 to ≤ 0.40%.

4. Welding additive material according to one of the claims 1 - 3,
**characterised in that**
the steel has an Mn-content of 1.60 to ≤ 2.10%.

5. Welding additive material according to one of the claims 1 - 4,
**characterised in that**
the steel has an N-content of 0.0030 to ≤ 0.0125%.

6. Welding additive material according to claim 5,
**characterised in that**
the steel has an N-content of 0.0030 to ≤ 0.0080%.

7. Welding additive material according to one of the claims 1 - 6,
**characterised in that**
the steel has a Cr-content of 0.70 to ≤ 0.85%.

8. Welding additive material according to one of the claims 1 - 7,
**characterised in that**
the steel has an Mo-content of 0.20 to ≤ 0.35%.

9. Welding additive material according to one of the claims 1 - 8,
**characterised in that**
the steel has a Ti-content of 0.02 to ≤ 0.04%.

10. Welding additive material according to one of the claims 1 - 9,
**characterised in that**
the steel has a total content of vanadium and niobium in the form of V + 2 x Nb of 0.05 to ≤ 0.12%.

11. Welding additive material according to one of the claims 1 - 10,
**characterised in that**
the steel has a B-content of 0.0020 to ≤ 0.0040%.

12. Welding additive material according to the preceding claims for use as material for arc welding, in particular gas metal arc welding and also for laser melting welding and laser sintering.

## Revendications

1. Métal d'apport de soudage en un acier autotrempant à résistance élevée, en tant que matériau pour l'assemblage par soudage, le rechargement par soudure et pour l'impression tridimensionnelle de pièces, présentant les teneurs suivantes, en % en masse :
| | |
|---|---|
| C | 0,07 jusqu'à ≤ 0,16 |
| Si | 0,12 jusqu'à ≤ 0,80 |
| Mn | 1,00 jusqu'à ≤ 2,20 |
| Cr | 0,50 jusqu'à ≤ 1,60 |
| Mo | 0,10 jusqu'à ≤ 1,00 |
| Al | 0,010 jusqu'à ≤ 0,060 |
| N | 0,0020 jusqu'à ≤ 0,0150 |
| Ti | 0,010 jusqu'à ≤ 0,050 |
| V + 2 x Nb | 0,030 jusqu'à ≤ 0,200 |
| B | 0,0008 jusqu'à ≤ 0,0050 |
| P | ≤ 0,020 |
| S | ≤ 0,010 |
le reste étant constitué de fer, y compris des éléments usuels d'accompagnement dans l'acier, sous forme de fil et/ou de poudre.

2. Métal d'apport de soudage selon la revendication 1, **caractérisé en ce que** l'acier présente une teneur en C de 0,07 jusqu'à ≤ 0,12 %.

3. Métal d'apport de soudage selon la revendication 1 ou 2, **caractérisé en ce que** l'acier présente une teneur en Si de 0,20 jusqu'à ≤ 0,40 %.

4. Métal d'apport de soudage selon l'une des revendications 1 à 3, **caractérisé en ce que** l'acier présente une teneur en Mn de 1,60 jusqu'à ≤ 2,10 %.

5. Métal d'apport de soudage selon l'une des revendications 1 à 4, **caractérisé en ce que** l'acier présente une teneur en N de 0,0030 jusqu'à ≤ 0,0125 %.

6. Métal d'apport de soudage selon la revendication 5, **caractérisé en ce que** l'acier présente une teneur en N de 0,0030 jusqu'à ≤ 0,0080 %.

7. Métal d'apport de soudage selon l'une des revendications 1 à 6, **caractérisé en ce que** l'acier présente une teneur en Cr de 0,70 jusqu'à ≤ 0,85 %.

8. Métal d'apport de soudage selon l'une des revendications 1 à 7, **caractérisé en ce que** l'acier présente une teneur en Mo de 0,20 jusqu'à ≤ 0,35 %.

9. Métal d'apport de soudage selon l'une des revendications 1 à 8, **caractérisé en ce que** l'acier présente une teneur en Ti de 0,02 jusqu'à ≤ 0,04 %.

10. Métal d'apport de soudage selon l'une des revendications 1 à 9, **caractérisé en ce que** l'acier présente une teneur totale en vanadium et en niobium sous forme de V + 2 x Nb de 0,05 jusqu'à ≤ 0,12 %.

11. Métal d'apport de soudage selon l'une des revendications 1 à 10, **caractérisé en ce que** l'acier présente une teneur en B de 0,0020 jusqu'à ≤ 0,0040 %.

12. Métal d'apport de soudage selon les revendications précédentes pour une utilisation en tant que matériau pour soudage à l'arc, en particulier pour soudage sous atmosphère protectrice avec électrode fusible, ainsi que pour soudage par fusion par laser et frittage laser.
